# EUROPEAN PATENT SPECIFICATION

(11) **EP 1 587 760 B1**
(45) Date of publication and mention of the grant of the patent: **27.06.2007**
(21) Application number: 04703615.7
(22) Date of filing: 20.01.2004
(51) Int. Cl.: C02F 1/461

(54) **ELECTROLYTIC CELL**
ELEKTROLYSEZELLE
PILE ELECTROLYTIQUE

(30) Priority: 21.01.2003 US 441383 P
(43) Date of publication of application: 26.10.2005
(73) Proprietor: Severn Trent DeNora, LLC, Wilmington, DE 19801 (US)
(72) Inventor: CASBEER, Dana, Angleton, TX 77516 (US); CHILDERS, Harold, E. II, Houston, TX (US); MATOUSEK, Rudy, Sugarland, TX 77478 (US)
(74) Representative: Schupfner, Georg
(86) International application number: PCT/US2004/001389
(87) International publication number: WO 2004/065309

(56) References cited:
- US-A- 1 541 947
- US-A- 3 849 281
- US-A- 4 124 480
- US-A- 4 142 959
- US-A- 4 714 534

## Description

### FIELD OF INVENTION

The present invention relates to an electrolytic cell. Particularly, the invention is directed to a compact electrolytic cell useful for on-site disinfection of contaminated waters.

### BACKGROUND

The electrolytic treatment of sewage and other contaminated water mixtures to disinfect the water is known. The on-site treatment of domestic-type waste is used at those locations where there is no access to a municipal water treatment plant or equivalent facility. Examples of such locations are ships and off-shore drilling platforms. Electrolytic cells are used in the treatment of sewage and contaminated water to produce disinfectant. Typically, a measured quantity of an electrolyte, generally salt as in brine, is added to an influent waste water stream. The waste water stream is passed through a plurality of closely spaced planar, electro-catalytically active electrodes. As the current is passed through, chlorine, oxygen or other disinfecting chemicals are generated in situ to reduce the BOD (biological oxygen demand), the COD (chemical oxygen demand) and the particulate matter suspended in the water.

The effluent containing sea water, decontaminated waste water, chlorine, carbon dioxide, hydrogen water and entrained suspended solids are removed from the cell. The disinfected wastewater stream is discharged from the treatment vessel into a filter for removal of fibrous residual suspended solids. The effluent is then pumped overboard. Such treatment is costly and requires the use of large and heavy, space consuming equipment.

Reference is made, for example, to the following United States patents disclosing electrolytic treatment of contaminated-water:

U. S. Pat. No. 4,783, 246 to Langeland et al. discloses a small hypochlorite electrolyzer for the on-site treatment of sewage. The electrolyzer is useful at such locations as ships and off-shore drilling platforms. The electrolyzer is operational with seawater for generating sodium hypochlorite. The electrolyzer comprises a two-piece casing which can be opened for easy access for inspection and cleaning. Plate-like bipolar electrodes are recessed in the casing. Seawater is mixed with the sewage, and the mixture is pumped into the electrolyzer. Sodium hypochlorite is generated from the seawater which reduces the biological oxygen demand (BOD) of the sewage, and purifies the sewage. The sewage is then allowed to flow overboard.

U. S. Pat. No. 5,364, 509 to Dietrich discloses the treatment of wastewater, particularly black and gray water, produced in macerating human waste, to provide reduced total suspended solids. The wastewater includes a liquid media comprising salt-containing substance such as brine or seawater. The wastewater is electrolytically treated. In the treatment the electrolysis cell contains an anode that has a surface coating including tin dioxide. During electrolysis, the cell will produce hypochlorite while also reducing BOD and residual chlorine discharge.

U.S. Patent 3,849,281 to Bennet et al. discloses an electrolytic cell comprising a housing having multiple bipolar electrodes and a plurality of electrically non-conductive partitions dividing the electrolytic cell into a plurality of separated cell units and allowing the flow therethough via oppositely placed wholes in the partitions. The electrodes are of a complex U-shape nature and are attached with their foot portion to only one wall of the housing.

Known treatment of waste water includes a system wherein the wastewater is received in a surge or retention tank and is delivered by gravity flow or pumped to a macerator. Prior to entering the macerator, salt water an a controlled flow basis is added to the wastewater in sufficient amounts to insure a high enough salt content for use as the electrolyte in an electrocatalytic cell.

From the macerator the wastewater to be treated is directed into a vertically oriented, elongated, electrocatalytic cell having a plurality of parallel, closely spaced electrodes therein positioned parallel to the flow of wastewater therethrough. The wastewater is directed through the electro-catalytic unit. The end electrodes of the spaced electrode plates are connected to a source of direct current sufficient to generate chlorine, oxygen and other treating chemicals in situ.

Water pollution control is required for any type of vessel which moves on the water within the territorial limits of many countries. The standards required for discharge of effluent into maritime waters are becoming more and more stringent in terms of suspended solids content, level of BOD, COD, fecal coliform count and other bacteria. The on-board treatment systems generally available today are expensive, bulky and hard to maintain. Space to accommodate the treatment equipment is of a concern, especially with smaller vessels. In addition to size, another problem with prior existing units, especially electrolytic cells using seawater as its brine, is the buildup of calcareous solids and biomass agglomerates that develop on the electrolytic plates and plug the cell. Maintenance required dismantling the cell and plates that were bolted into position and scrubbing clean. It has remained a problem to develop a compact, low weight, easy to maintain unit which may be used for new vessels or to retrofit existing vessels

### SUMMARY

The electrolytic cell of the present invention generates disinfectant, preferably hypochlorite, for reduction of BOD, COD, suspended solids, fecal coliform count and other bacteria to acceptable standards within a compact unit that is considerably smaller than previously known units and yet equivalent in efficiency and production. Advantageously, the electrolytical cell is easy to maintain because its electrolytic plates slide into grooves within the inner house walls and can be easily and quickly removed. Another advantage of the instant electrolytic cell is a simple, "keyed" electode connection to an outside power source. The keyed connection both simplifies and improves safety for users during onboard assembly or maintenance of the electrolytic cell.

In one aspect, the electrolytic cell comprises a housing having an inlet and an outlet to allow the flow of fluid through the housing. An anode and a cathode are positioned within the housing, the cathode distal from the anode. One or more bipolar electrolytic plates are positioned between the anode and cathode. Each electrolytic plate has four edges with three of the four edges securely fitted within the housing so as to form a seal with the housing. The fourth edge in a clearance position relative to the housing to form a path for the serpentine flow of fluid therethrough. The fluid can comprise waste water or other contaminated water along with sea water as its brine. A power source is connected to the anode and the cathode.

The electrolytic cell has a housing having an inlet for the influent flow and an outlet for the effluent. The fluid to be treated is allowed to flow through the housing. The six sides of the housing are made up of a bottom plate, a top plate, a first end cap, a second end cap, a first side plate and a second side plate. The first side plate defines at least one inlet and the second side plate defines at least one outlet. Additional ports adapted to receive test instrumentation and piping connections can be defined by either the first or the second side or by both sides.

The internal sides of housing can comprise grooves. In one embodiment, the grooves are located on the inner surface of the top plate, alternatively, the grooves can be positioned on the inner surface of the bottom plate or on the inner surfaces of both the top plate and the bottom plate. The inner side of the top plate and the inner side of the bottom plate each define two sets of grooves for receiving the electrolytic plates. The first set of grooves extends from the first end cap to a point distal from the second end cap. The second set of grooves extending from the second end cap to a point distal from the first end cap. The grooves of the first set are alternately aligned with the grooves of the second set. The first end cap also defines grooves for receiving a portion of the electrolytic plates and the second end cap defines grooves for receiving alternate electrolytic plates so that three edges of each electrolytic plate are friction-fitted within the grooves defined by the top plate, the bottom plate and one end cap to form a seal between the plate and the housing. The fourth edge of each electrolytic plate is in a clearance position relative to the housing. In this way, a path is formed for the serpentine flow of fluid from the inlet to the outlet. A power source is connected to the anode and the cathode.

The electrolytic plates are slidable within the grooves for removal from housing. No screws, bolts or similar fasteners are required to hold the plates in place as the fluid flows through the cell. One problem with electrolytic cells, especially cells using seawater as. its brine, is the buildup of calcareous solids and Biomass agglomerates that develop an the electrolytic plates and plug the cell. On site maintenance requires dismantling the cell and plates and scrubbing to clean and remove the buildup. Since the electrolytic plates of this invention are not bolted but are slideable within the grooves of the housing, they slide out of the housing for ease of maintenance.

The electrolytic plates are spaced apart to form the flow path. Each electrolytic plate comprising a front side and a back side so that the path of fluid includes the flow of fluid over each side of the electrolytic plate. Preferably, the path of the fluid flow causes the fluid to pass from one side of the plate around the edge cleared from the housing and to the other side of the plate.

Beneficially, the anode comprises an anode terminal tab and the cathode comprises a cathode terminal tab for attachment to the power source, the terminal tabs extending external to the housing, the first end cap comprising at least two slots for receiving the anode terminal tab and the cathode terminal tab. Preferably, the size of the anode terminal tab is different from the size of the cathode terminal tab and the slots are sized corresponding to the size of the tabs. Positive and negative wires extend between the power source and the anode and cathode, respectively. The wires are in direct contact with the corresponding anode tab and cathode tab without the use of intermediary connections such as bosses.

In one aspect, the size of the electrolytic cell comprises a height that is within a range of 10.2 cm (4 inches) to 38.1 cm (15 inches) a width within a range of 10.2 cm (4 inches) to 38.1 cm (15 inches) and a length within a range of 25.4 cm (10 inches) to 63.5 cm (25 inches). In an alternative embodiment, the height is within a range of 15.2 cm (6 inches) to 20.3 cm (8_inches), the width is within a range of 15.2 cm (6 inches) to 20.3 cm (8 inches) and the length is within a range of 25.4 cm (10 inches) to 35.6 cm (14 inches) preferably, the height is 17.8 cm (7 inches) the width is 17.8 cm (7 inches) and the length is 30.5 cm (12 inches).

### BRIEF DESCRIPTION OF DRAWINGS

Fig. 1 illustrates a perspective view, partially in section, of the electrolytic cell.
Fig. 2 illustrates the inside of the top plate, depicting the alternating grooves.
Fig. 3 illustrates the anode plate, depicting the anode tab and Fig. 4 illustrates the cathode plate, depicting the cathode tab.
Fig. 5 illustrates the first end cap depicting the slots.
Fig. 6 illustrates the second end cap.
Fig. 7 illustrates the serpentine path of the flow of fluid.
Fig. 8 illustrates a planar view of an electrolytic plate.

### DETAILED DESCRIPTION OF THE PREFERRED EMBODIMENTS

The present invention relates to a compact electrolytic cell used for the on-site treatment of contaminated waters. On-site refers to locations such as drilling platforms, large boats and ships. Contaminated waters can include both industrial and domestic waste waters. For the purposes of this description, the electrolytic cell will refer to domestic waste waters containing suspended solids. The term "domestic waste water", in contrast to industrial chemical waste water, means the typical household-type waste which comprises human waste known as "blackwater" as well as kitchen and bath waste known as "gray water".

Sewage comprises both black and gray water. Prior to treatment in the electrolytic cell, the waste water is passed, usually from a holding tank, to a macerating unit for reducing the particle sizes of the solids within the waste. The wastewater is then mixed with a saltcontaining substance such as seawater in the macerating unit forming a reaction mixture.
The reaction mixture is introduced into the electrolytic cell.

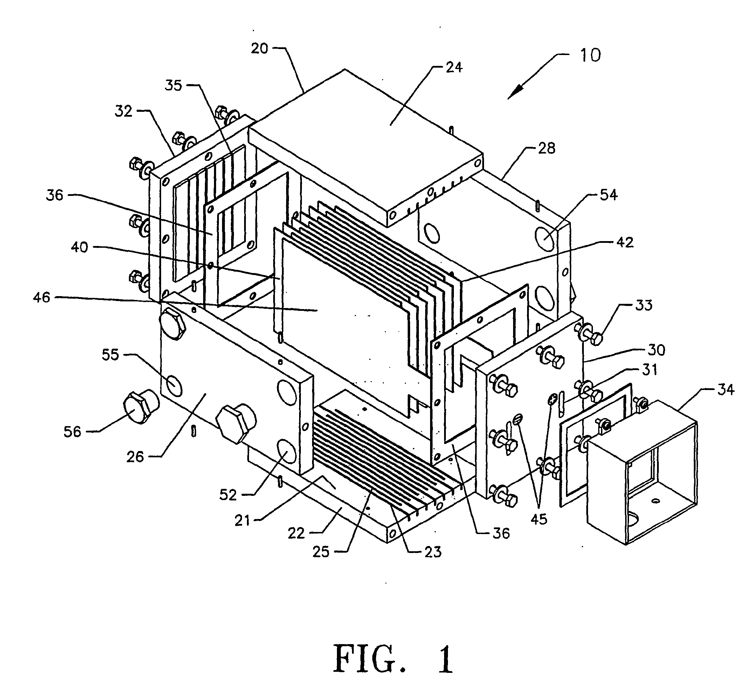

Referring to Fig. 1, the electrolytic cell 10 of this invention comprises a housing 20, anode 46 and cathode 42 electrodes within the housing 20 and one or more electrolytic plates 40. The electrolysis of brine flowing past the electrolytic plates 40 generates oxygenated species and sodium hypochlorite in the reaction mixture for reduction of BOD and COD. The sodium hypochlorite prevents the proliferation of algae, slime, and bacteria. The electrolytic cell can be employed at the point of water use, and eliminates the need for the storage of sodium hypochlorite at such point of use. Bacterial and marine growth are reduced.

The electrolytic cell 10 comprises a housing 20 having an inlet 52 for the flow of influent fluid. The fluid can comprise waste water or other contaminated water and macerated solids along with sea water as the brine. The housing 20 comprises six sides. Bolts 33 are used to attach the six sides together to form the housing 20. The six sides of the housing comprise a bottom plate 22, a top plate 24, a first end cap 30, a second end cap 32, a first side plate 26 and a second side plate 28. The first side plate 26 defines at least one inlet 52 and one or more additional ports 55 adapted to receive test instrumentation and piping connections for flushing and cleaning the cell. The second side plate defines at least one outlet 54 as well as additional ports 55. Plugs 56 are used for ports 55 that not in use. The outlet 54 allows the fluid flowing through the housing to exit as effluent for further treatment or discharge.

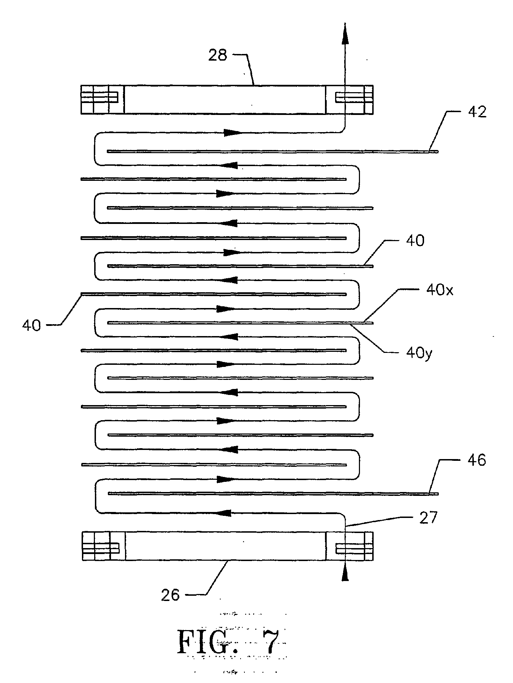

The anode 46 and the cathode 42 are positioned within the housing 20 with the cathode 42 distal from the anode 46. Preferably, one or more bipolar electrolytic plates 40 are positioned between the anode 46 and cathode 42. The electrolytic plates 40 are in parallel alignment and spaced apart from each other to allow the flow of fluid between the plates 40 as seen in Fig. 7. In one aspect, the anode is a coated anode. The coating can comprise a tin oxide and a precious metal on an electro-conductive coated substrate as disclosed in Dietrich 5,364,509. The electro-conductive coated substrate can comprise a platinum group metal. Alternately the coating can comprise only tin oxide and a precious metal. Each electrolytic plate 40 has four edges 40a, 40b, 40c, 40d with three of the four edges securely fitted within the housing so as to form a seal with the housing 20. The fourth edge of the plate 40 is in a clearance position relative to the housing to form a path for the serpentine flow of fluid therethrough as seen in Fig. 7.

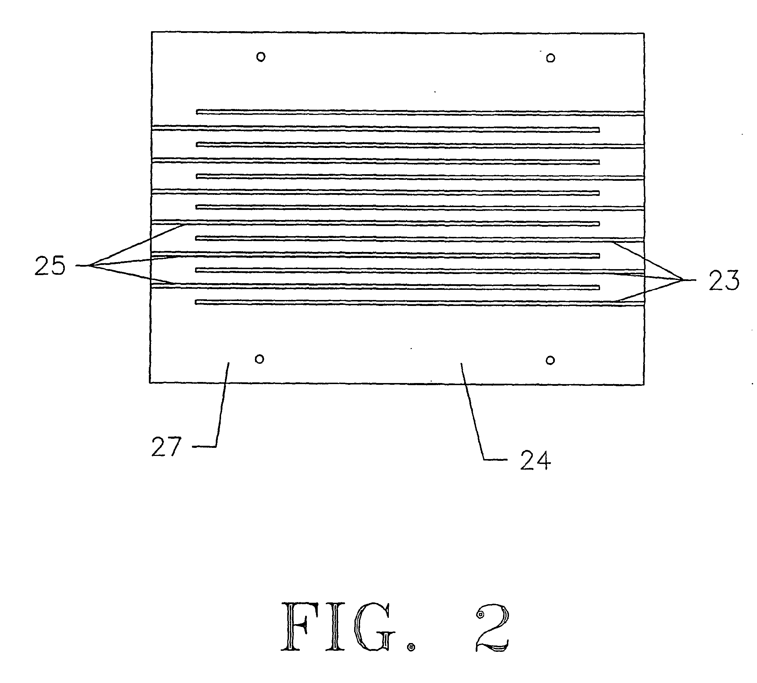

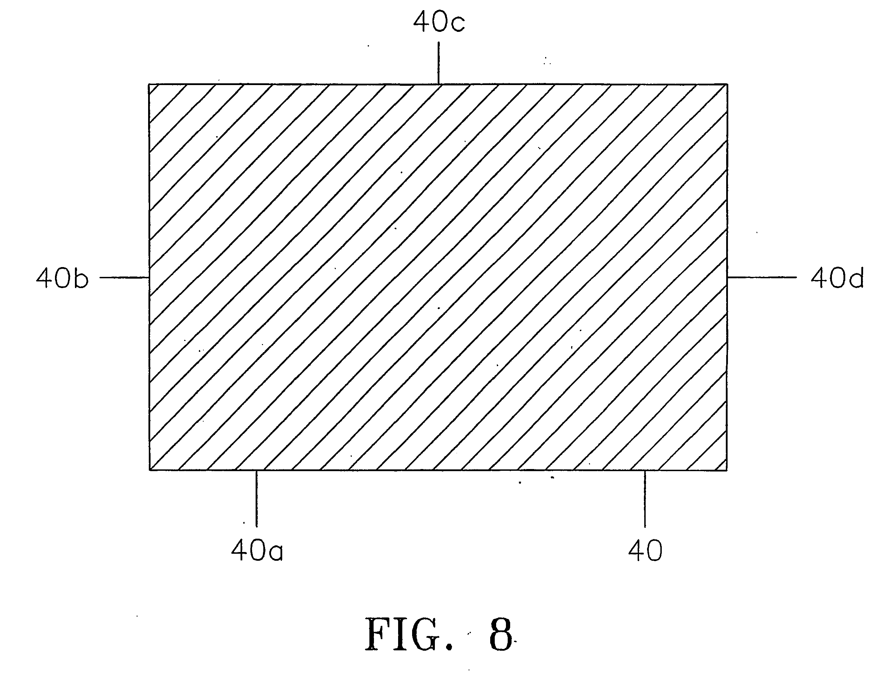

Referring to Figs. 1, 2 and 8, the internal walls of housing 20 can comprise grooves 23, 25. The edges 40a, 40b, 40c of the electrolytic plates 40 slide into the grooves 23, 25 on three inside walls of the housing. In one embodiment, the grooves 23, 25 are on the inner wall 27 of the top plate 24 as well as on the inner walls of both end caps 30, 32. Alternatively, the grooves 23, 25 are positioned in the bottom plate 22 and in both end caps 30, 32. In a preferred embodiment illustrated in Fig. 2, the inner wall 27 of the top plate 24 and the inner wall 21 of the bottom plate 22 each define two sets of grooves 23, 25 for receiving the electrolytic plates 40. The first set of grooves 23 extends from the first end cap 30 to a point distal from the second end cap 32. The second set of grooves 25 extending from the second end cap 32 to a point distal from the first end cap 30. The grooves 23 of the first set are alternately aligned with the grooves of the second set 25. The inner wall of the first end cap 30 also defines grooves 35 for receiving a portion of the electrolytic plates 40 and the inner wall of the second end cap 32 defines grooves for receiving alternate electrolytic plates 40 so that three edges 40a, 40b, 40c of each electrolytic plate are friction-fitted within the grooves defined by the top plate 24, the bottom plate 22 and one end cap 32 to form a seal between the plate and the housing. Gaskets 36 can be used for end plates 30, 32 and around the housing 20 to ensure the seal. The fourth edge 40d of each electrolytic plate is in a clearance position relative to the housing 20.

In this way, a path 27, as shown in Fig. 7, is formed for the serpentine flow of fluid from the inlet 52 to the outlet 54. Each electrolytic plate comprising a front side 40x and a back side 40y so that the path 27 of fluid includes the flow of fluid over each side 40x, 40y of the electrolytic plate 40. Preferably, the path 27 of the fluid flow causes the fluid to pass from one side of the plate 40x around the edge 40d cleared from the housing 20 and to the other side of the plate 40y. Except for the small area of the plate 40 that is within the grooves, (the grooves are approximately 0.32 cm (1/8 inch) deep,) at least 95% of the surface-area of each electrolytic plate 40 is exposed to the electrolytic substrate and therefore available for-the electrolytic process that produces the hypochlorite. This allows for substantially full utilization of the electrode 40. In one embodiment, the space between the electrolytic plates 40 is within a range of 0.16 cm (1/16 inch) to 0.79 cm (5/16 inch), preferably 0.64 cm (1/4 inch) The increase space allows for lower pressure drop and easier passage of fluid through the path of the cell. The size of the cell 10 remains compact and small without a loss of efficiency or capacity to produce hypochlorite because both sides of the electrolytic plate are utilized.

The electrolytic plates 40 are slidable within the grooves 23,25 for ease of removal from housing 20. No screws, bolts or similar fasteners are required to hold the plates 40 in place as the fluid flows through the cell 10. One problem with electrolytic cells, especially cells using seawater as its brine, is the build-up of calcareous solids and biomass agglomerates that develop an the electrolytic plates and plug the cell. Maintenance required dismantling the cell and removing the plates 40 from the cell 10 to scrub clean. Since the electrolytic plates 40 of this invention 10 are not bolted in place, they 40 are easily removed by sliding out of the grooves 23,25 once an end plate is unbolted. The manufacture and maintenance of the cell 10 is easier and less costly.

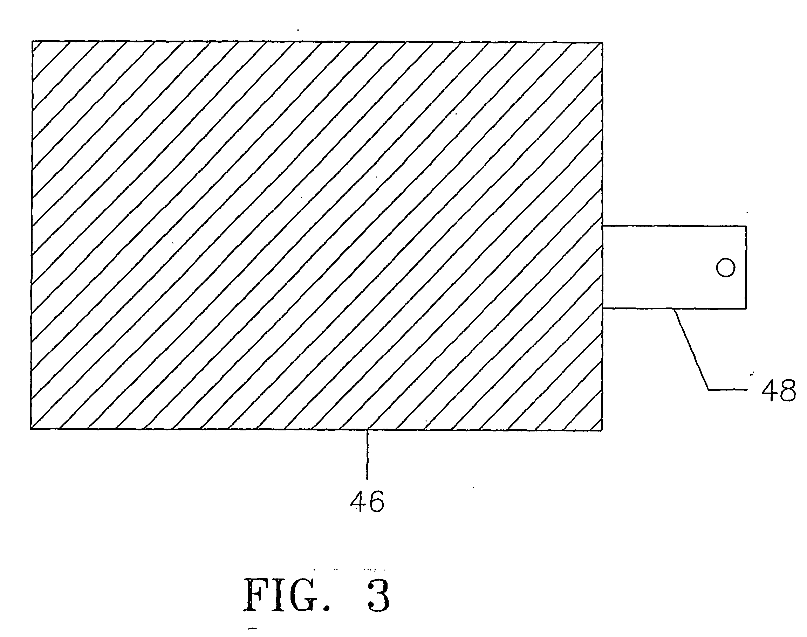

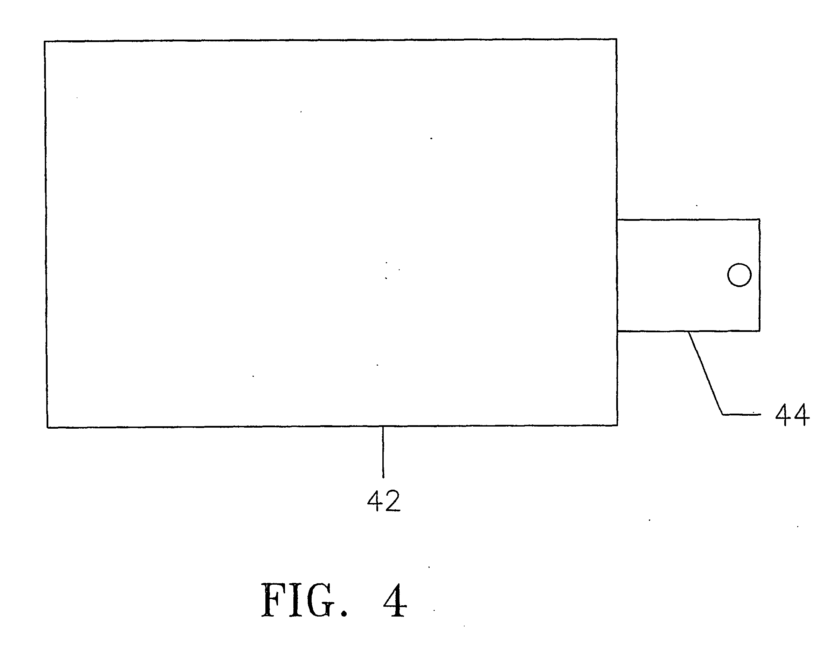

Figures 3 and 4 illustrate another benefit of the present invention.

Figure 3 depicts an anode 46 comprising an anode terminal tab 48 and Fig. 4 depicts a cathode 42 having a cathode terminal tab 44. The anode terminal tab 48 and the cathode terminal tab 44 are used for attachment of the anode 46 and cathode 42 to a power source outside of the electrolytic cell 10. The terminal tabs 44,48 extend externally from the housing 20. The first end cap 30 comprises at least two slots 31 for receiving the anode terminal tab 48 and the cathode terminal tab 44. Advantageously, the size of the anode terminal tab 48 is different from the size of the cathode terminal tab 44 and the slots 31 are sized corresponding to the size of the tabs for ease and safety during the assembly of the cell 10. Preferably, each slot is also keyed with + and-signs 45 as additional precaution in the assembly of the cell 10. An external power source is connected to the anode 46 and the cathode 47 by means of the tabs 48,44.

Positive and negative wires extend from the power source to the anode 46 and cathode 42, respectively. The wires are in direct contact with the corresponding anode tab 48 and cathode tab 44 without the use of intermediary connections such as bosses. Screws or bolts connect the wires to the tabs 48,44. An electric box 34 can be used to house the connection of the power source to the anode and cathode tabs 48,44.

Another important aspect of this invention is its size. The electrolytic cell 10 is compact and yet maintains an efficiency equivalent to larger and bulkier cells. The size of the electrolytic cell 10 comprises a height that is within a range of 10.2 cm (4 inches) to 38.1 cm (15 inches), a width within a range of 10.2 cm (4 inches) to 38.1 cm (15 inches) and a length within a range of 25.4 cm (10 inches) to 63.5 cm (25 inches). In an alternative embodiment, the height is within a range of 15.2 cm (6 inches) to 20.3 cm (8 inches), the width is within a range of 15.2 cm (6 inches) to 20.3 cm (8 inches) and the length is within a range of 25.4 cm (10 inches) to 35.6 cm (14 inches), preferably, the height is 17.8 cm (7 inches), the width is 17.8 cm (7 inches) and the length is 30.5 cm (12 inches). The size of the cell depends an the amount of contaminated water required to be disinfected. Cells 10 within the greater size range are utilized for bigger vessels or where more waste water is produced. The production of the cell is increased in the cells by adding additional electrolytic plates 40 thereby increasing the capacity of the cell to produce the disinfectant, sodium hypochlorite for example. The test examples below compare a prior patented larger cell with the compact cell of this invention.

### Example 1 (not of the invention)

The cell used for testing as the control was the existing technology cell depicted and described in reference to FIGS. 2 and 3 in U. S. patent 5,364,509. The size of the example 1 cell is 21.6 cm (8 1/2 inches) in length by 6.35 cm (2 1/2 inches) in width (or depth) and 121.9 cm (48 inches) in height. The anode coating is that described in this patent. The cell was operated in the vertical position, at 11.3 to 11.8 amps, and with an effluent salt concentration of approximately 12 grams per_liter NaCl. The total flow to the cell was one gallon per minute divided equally between synthetic seawater (29 gram per liter (NaCl) brine, 1200 ppm Magnesium, and 400 ppm Calcium) and standard potable service water.

Operating duration was 9 hours with overall voltage of 82 volts. At these conditions the cell effluent contained 235 to 250 ppm available chlorine as measured by colorimetric titration with sodium thiosulfate. The resulting cell chlorine current efficiency was 43%.

### Example 2

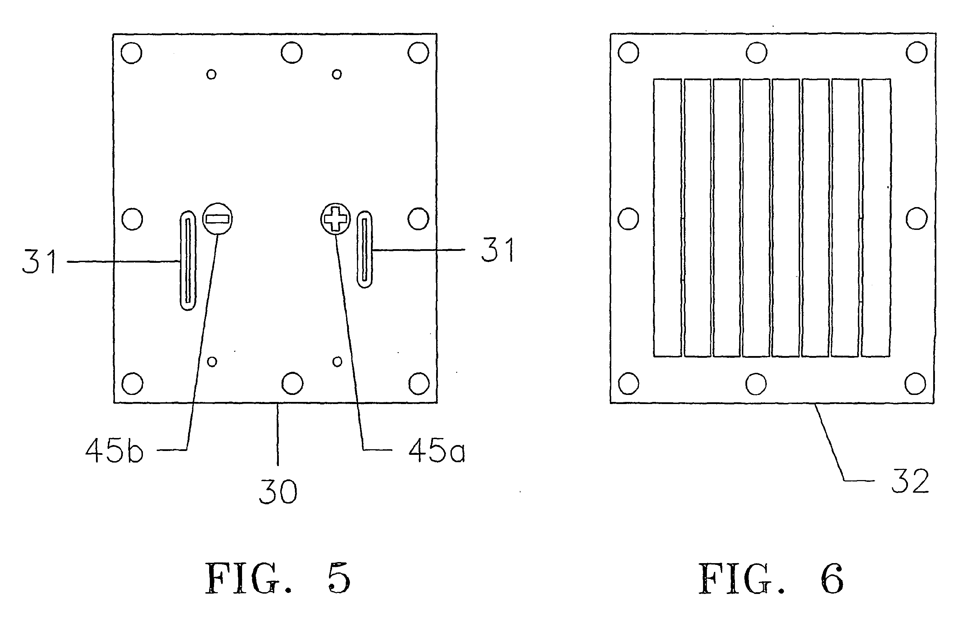

The cell used for testing as depicted and described in this patent by Figs. 1-8. The size of the example 2 cell is 24.1 cm (9 1/2 inches) in length by 14.0 cm (5 1/2 inches) in width (or depth) and 14.0 cm (5 1/2 inches) in height. The test cell consisted of one terminal anode, one terminal cathode, and eleven bipolar plates coated with a precious metal oxide (same as the anode coating used in example 1) to serve as the anode portion of the electrode. The cell was operated at 10 amps, and with an effluent salt concentration of approximately 13 grams per_liter NaCl. The total flow to the cell was 1.1 gallons per minute divided equally between synthetic seawater (29 grams per liter(NaCl) brine, 1200 ppm Magnesium, and 400 ppm Calcium) and standard potable service water. Operating duration was 8 hours with overall voltage of 48 volts. At these conditions the cell effluent contained approximately 297 ppm available chlorine as measured by colorimetric titration with sodium thiosulfate. The resulting cell chlorine current efficiency was 46%.

The electrolytic cell of this invention, as used for test example 2, is smaller and simpler in design, and yet achieves an equivalent efficiency and
production of hypochlorite as prior electrolytic cells, as depicted in example 1.

Efficiency is not lost by shrinking or miniaturizing the cell.

The foregoing description is illustrative and explanatory of preferred embodiments of the Invention, and variations in the method, systems and other details will become apparent to those skilled in the art.

## Claims

1. An electrolytic cell comprising
- a housing having an inlet and an outlet to allow the flow of fluid through the housing,
- an anode positioned within the housing,
- a cathode positioned within the housing, the cathode distal from the anode,
- one or more bipolar electrolytic plates positioned between the anode and cathode,
- and a power source connected to the anode and cathode,
**characterized in that**
- each electrolytic plate comprises four edges, three of the four edges are securely fitted within the housing to form a seal with the housing,
- the fourth edge is in a clearance position relative to the housing to form a path for the serpentine flow of fluid therethrough and
- the electrolytic plates are spaced apart from each other to form the flow path wherein the path of the fluid flow causes the fluid to pass from one side of the plate around the edge cleared from the housing and to the other side of the plate.

2. The electrolytic cell of claim 1, wherein the electrolytic plates are fitted within the housing to means of grooves wherein there are slidable for removal from the housing.

3. The electrolytic cell of claim 1 or 2, wherein the housing comprises a bottom plate, a top plate, a first end cap, a second end cap, a first side plate and a second side plate, the first side plate defining an inlet and the second side plate defining an outlet; and wherein the top plate and the bottom plate each define two sets of grooves for receiving the electrolytic plates whereby the first set of grooves extends from the first end cap to a point distal from the second end cap, the second set of grooves extends from the second end cap to a point distal from the first end cap, the grooves of the first set alternately align with the grooves of the second set, the electrolytic plates friction-fit within grooves in the top plate and the bottom plate so that one edge of each electrolytic plate is in a clearance position relative to the housing to form a path for the serpentine flow of fluid from the inlet to the outlet.

4. The electrolytic cell of claim 1 and 2 wherein the housing comprises a bottom plate, a top plate, a first end cap, a second end cap, a first side plate and a second side plate, the first side plate defining an inlet and the second side plate defining an outlet.

5. The electrolytic cell of claim 4 wherein either the top plate or the bottom plate define two sets of grooves for receiving the electrolytic plates, the first set of grooves extending from the first end cap to a point distal from the second end cap, the second set of grooves extending from the second end cap to a point distal from the first end cap, the grooves of the first set alternately aligned with the grooves of the second set, the electrolytic plates friction-fitted within grooves in the bottom plate and each electrolytic plate in a clearance position relative to the housing so that a path is formed for the serpentine flow of fluid from the inlet to the outlet.

6. The electrolytic cell of claims 2, 3 and 5 wherein the first end cap defines grooves for receiving electrolytic plates and the second end cap defines grooves for receiving alternate electrolytic plates so that each electrolytic plate is friction-fitted within the grooves defined by either the top plate, the bottom plate or both the top plate and the bottom along with one end cap to form a seal.

7. The electrolytic cell of claims 2, 3 and 5 wherein the electrolytic plates are slideably friction-fitted within the grooves for removal from housing.

8. The electrolytic cell of claims 1 to 3 wherein the anode comprises an anode terminal tab and the cathode comprises a cathode terminal tab for attachment to the power source, the terminal tabs extending external to the housing, the first end cap comprising at least two slots for receiving the anode terminal tab and the cathode terminal tab, the terminal tabs extending external to the housing through the slots.

9. The electrolytic cell of Claim 8 wherein the size of the anode terminal tab is different from the size of the cathode terminal tab and the slots are sized corresponding to the size of the respective tab.

10. The electrolytic cell of Claim 8 further comprising positive and negative wires between the power source and the anode and cathode, the wires in direct contact with the corresponding anode tab and cathode tab without the addition of intermediary connections.

11. The electrolytic cell of claims 1 to 3 wherein each electrolytic plate comprising a front side and a back side so that the path of fluid includes the flow of fluid over each side of the electrolytic plate.

12. The electrolytic cell of claims 1 to 3 wherein at least 95% of surface area of each electrolytic plate is in contact with the fluid.

13. The electrolytic cell of claim 1 to 3 wherein the height is within a range of 10.2 cm (4 inches) to 38.1 cm (15 inches), the width is within a range of 10.2 cm (4 inches) to 38.1 cm (15 inches) and the length is within a range of 25.4 cm (10 inches) to 63.5 cm (25 inches).

14. The electrolytic cell of claim 13 wherein the height is within a range of 15.2 cm (6 inches) to 20.3 cm (8 inches), the width is within a range of 15.2 cm (6 inches) to 20.3 cm (8 inches) and the length is within a range of 25.4 cm (10 inches) to 35.6 cm (14 inches).

15. The electrolytic cell of claim 11 wherein each side plate defines two or more ports into the housing, the ports adapted to receive test instrumentation and piping connections.

## Patentansprüche

1. Elektrolysezelle, aufweisend:
- ein Gehäuse mit einem Einlass und einem Auslass, um den Durchstrom eines Fluids durch das Gehäuse zu ermöglichen,
- eine innerhalb des Gehäuses positionierte Anode,
- eine innerhalb des Gehäuses positionierte Kathode, die Kathode in einem Abstand von der Anode,
- eine oder mehrere zwischen der Anode und der Kathode angeordnete bipolare Elektrolyseplatten,
- und eine mit der Anode und Kathode verbundene Energiequelle,
**dadurch gekennzeichnet,**
- **dass** jede Elektrolyseplatte vier Ränder aufweist, wovon drei von den vier Rändern fest innerhalb des Gehäuses zur Ausbildung einer Dichtung mit dem Gehäuse befestigt sind,
- der vierte Rand sich in einer Abstandsposition in Bezug auf das Gehäuse befindet, um einen Pfad für den serpentinenförmigen Strom von Fluid dadurch zu ermöglichen, und
- die Elektrolyseplatten voneinander entfernt sind, um den Strömungspfad auszubilden, wobei der Pfad des Fluidstroms einen Übergang des Fluids von der einen Seite der Platte um den von dem Gehäuse freien Rand herum und zu der anderen Seite der Platte bewirkt.

2. Elektrolysezelle nach Anspruch 1, wobei die Elektrolyseplatten innerhalb des Gehäuses an Nuteneinrichtungen befestigt sind, worin sie zur Entfernung aus dem Gehäuse schiebbar sind.

3. Elektrolysezelle nach Anspruch 1 oder 2, wobei das Gehäuse eine Bodenplatte, eine Deckelplatte, eine erste Endkappe, eine zweite Endkappe, eine erste Seitenplatte und eine zweite Seitenplatte aufweist, wobei die erste Seitenplatte einen Einlass und die zweite Seitenplatte einen Auslass definiert; und wobei die Deckelplatte und die Bodenplatte zwei Nutensätze für die Aufnahme der Elektrolyseplatten definieren, wodurch sich der erste Nutensatz von der ersten Endkappe zu einem Punkt im Abstand von der zweiten Endkappe erstreckt, und sich der zweite Nutensatz von der zweiten Endkappe zu einem Punkt im Abstand von der ersten Endkappe erstreckt, die Nuten des ersten Satzes abwechselnd zu den Nuten des zweiten Satzes ausgerichtet sind, die Elektrolyseplatten sich innerhalb der Nuten in der Deckelplatte und der Bodenplatte so in Reibungssitz befinden, dass ein Rand jeder Elektrolyseplatte sich in einer Abstandsposition in Bezug zu dem Gehäuse befindet, um einen Pfad für den serpentinenförmigen Strom des Fluids von dem Einlass zu dem Auslass auszubilden.

4. Elektrolysezelle nach Anspruch 1 und 2, wobei das Gehäuse eine Bodenplatte, eine Deckelplatte, eine erste Endkappe, eine zweite Endkappe, eine erste Seitenplatte und eine zweite Seitenplatte aufweist, wobei die erste Seitenplatte einen Einlass und die zweite Seitenplatte einen Auslass definiert.

5. Elektrolysezelle nach Anspruch 4, wobei entweder die Deckelplatte oder die Bodenplatte zwei Nutensätze zur Aufnahme der Elektrolyseplatten definiert, wobei sich der erste Nutensatz von der ersten Endkappe zu einem Punkt im Abstand von der zweiten Endkappe erstreckt, der zweite Nutensatz sich von der zweiten Endkappe zu einem Punkt im Abstand von der ersten Endkappe erstreckt, die Nuten des ersten Satzes abwechselnd zu den Nuten des zweiten Satzes ausgerichtet sind, die Elektrolyseplatten sich in Nuten in der Bodenplatte in einem Reibungssitz und jede Elektrolyseplatte sich in einer Abstandsposition in Bezug auf das Gehäuse befinden, so dass ein Pfad für den serpentinenförmigen Strom des Fluids von dem Einlass zu dem Auslass ausgebildet wird.

6. Elektrolysezelle nach Anspruch 2, 3 und 5, wobei die erste Endkappe Nuten für die Aufnahme von Elektrolyseplatten definiert und die zweite Endkappe Nuten für die Aufnahme abwechselnder Elektrolyseplatten definiert, so dass sich jede Elektrolyseplatte in Reibungssitz innerhalb der entweder von der Deckelplatte, der Bodenplatte oder sowohl der Deckenplatte als auch der Bodenplatte zusammen mit einer Endkappe definierten Nut befindet, um eine Dichtung auszubilden.

7. Elektrolysezelle nach Anspruch 2, 3 und 5, wobei sich die Elektrolyseplatten verschiebbar in einem Reibungssitz innerhalb der Nuten zur Entfernung aus dem Gehäuse befinden.

8. Elektrolysezelle nach Anspruch 1 bis 3, wobei die Anode ein Anodenanschlussanhängsel und die Kathode ein Kathodenanschlussanhängsel zur Befestigung an der Energiequelle aufweist, wobei sich die Anschlussanhängsel aus dem Gehäuse heraus erstrecken, die erste Endkappe wenigstens zwei Schlitze für die Aufnahme des Anodenanschlussanhängsels und des Kathodenanschlussanhängsels aufweist, und sich die Anschlussanhängsel durch die Schlitze hindurch aus dem Gehäuse erstrecken.

9. Elektrolysezelle nach Anspruch 8, wobei die Größe des Anodenanschlussanhängsels sich von der Größe des Kathodenanschlussanhängsels unterscheidet, und die Schlitze entsprechend der Größe des entsprechenden Anhängsels bemessen sind.

10. Elektrolysezelle nach Anspruch 8, welche ferner positive und negative Drähte zwischen der Energiequelle und der Anode und der Kathode aufweisen, wobei die Drähte in direktem Kontakt mit dem entsprechenden Anodenanschlussanhängsel und Kathodenanhängsel ohne die Hinzufügung zusätzlicher Zwischenverbindungen stehen.

11. Elektrolysezelle nach Anspruch 1 bis 3, wobei jede Elektrolyseplatte eine Vorderseite und eine Rückseite aufweist, so dass der Pfad des Fluids den Strom des Fluids über jede Seite der Elektrolyseplatte beinhaltet.

12. Elektrolysezelle nach Anspruch 1 bis 3, wobei wenigstens 95% der Oberfläche jeder Elektrolyseplatte mit dem Fluid in Kontakt steht.

13. Elektrolysezelle nach Anspruch 1 bis 3, wobei die Höhe innerhalb eines Bereichs von 10,2 cm (4 inches) bis 38,1 cm (15 inches) liegt, die Breite innerhalb eines Bereichs von 10,2 cm (4 inches) bis 38,1 cm (15 inches) liegt und die Länge innerhalb eines Bereichs von 25,4 cm (10 inches) bis 63,5 cm (25 inches) liegt.

14. Elektrolysezelle nach Anspruch 13, wobei die Höhe innerhalb eines Bereichs von 15,2 cm (6 inches) bis 20,3 cm (8 inches) liegt, die Breite innerhalb eines Bereichs von 15,2 cm (6 inches) bis 20,3 cm (8 inches) liegt und die Länge innerhalb eines Bereichs von 25,4 cm (10 inches) bis 35,6 cm (14 inches) liegt.

15. Elektrolysezelle nach Anspruch 11, wobei jede Seitenplatte zwei oder mehr Anschlüsse in das Gehäuse ausbildet, wobei die Anschlüsse dafür angepasst sind, Prüfinstrumente und Rohrverbindungen aufzunehmen.

## Revendications

1. Pile électrolytique, comprenant
- un boîtier ayant un orifice d'entrée et un orifice de sortie pour permettre au flux de fluide de passer à travers le boîtier,
- une anode placée à l'intérieur du boîtier,
- une cathode placée à l'intérieur du boîtier, la cathode étant distale de l'anode,
- une ou plusieurs plaques électrolytiques bipolaires placées entre l'anode et la cathode,
- et une source d'énergie connectée à l'anode et à la cathode,
**caractérisée en ce que**
- chaque plaque électrolytique comprend quatre arêtes, trois des quatre arêtes sont emmanchées de manière fixe à l'intérieur du boîtier pour former un scellement avec le boîtier,
- la quatrième arête est en position d'espacement par rapport au boîtier pour former une voie afin que le flux tortueux de fluide passe au travers et
- les plaques électrolytiques sont espacées les unes des autres pour former une voie de flux dans laquelle la voie du flux de fluide fait passer le fluide par un côté de la plaque autour de l'arête espacée par rapport au boîtier et en direction de l'autre côté de la plaque.

2. Pile électrolytique selon la revendication 1, dans laquelle les plaques électrolytiques sont emmanchées dans le boîtier sur des moyens de rainures, dans lesquels elles peuvent être glissées pour être retirées du boîtier.

3. Pile électrolytique selon la revendication 1 ou 2, dans laquelle le boîtier comprend une plaque de fond, une plaque supérieure, un premier capuchon terminal, un deuxième capuchon terminal, une première plaque latérale et une deuxième plaque latérale, la première plaque latérale définissant un orifice d'entrée et la deuxième plaque latérale définissant un orifice de sortie ; et dans laquelle la plaque supérieure et la plaque de fond définissent chacune deux jeux de rainures pour recevoir les plaques électrolytiques, moyennant quoi le premier jeu de rainures s'étend depuis le première capuchon terminal vers un point distal du deuxième capuchon terminal, le deuxième jeu de rainures s'étend depuis le deuxième capuchon terminal vers un point distal du premier capuchon terminal, les rainures du premier jeu s'alignent alternativement avec les rainures du deuxième jeu, les plaques électrolytiques s'emmanchent par friction à l'intérieur des rainures dans la plaque supérieure et la plaque de fond de sorte qu'une arête de chaque plaque électrolytique soit dans une position d'espacement par rapport au boîtier pour former une voie pour le flux tortueux de fluide depuis l'orifice d'entrée vers l'orifice de sortie.

4. Pile électrolytique selon les revendications 1 et 2, dans laquelle le boîtier comprend une plaque de fond, une plaque supérieure, un premier capuchon terminal, un deuxième capuchon terminal, une première plaque latérale et une deuxième plaque latérale, la première plaque latérale définissant un orifice d'entrée et la deuxième plaque latérale définissant un orifice de sortie.

5. Pile électrolytique selon la revendication 4, dans laquelle soit la plaque supérieure soit la plaque de fond définit deux jeux de rainures pour recevoir les plaques électrolytiques, le premier jeu de rainures s'étendant depuis le premier capuchon final vers un point distal du deuxième capuchon final, le deuxième jeu de rainures s'étendant depuis le deuxième capuchon final vers un point distal du premier capuchon final, les rainures du premier jeu sont alignées en alternance avec les rainures du deuxième jeu, les plaques électrolytiques sont emmanchées par friction à l'intérieur des rainures dans la plaque de fond et chaque plaque électrolytique est dans une position d'espacement par rapport au boîtier de sorte qu'une voie est formée pour le flux tortueux de fluide depuis l'orifice d'entrée vers l'orifice de sortie.

6. Pile électrolytique selon les revendications 2, 3 et 5, dans laquelle le premier capuchon terminal définit des rainures pour recevoir des plaques électrolytiques et le deuxième capuchon terminal définit des rainures pour recevoir des plaques électrolytiques alternées de sorte que chaque plaque électrolytique soit emmanchée par friction à l'intérieur des rainures définies soit par la plaque supérieure, soit par la plaque de fond soit par la plaque supérieure et le fond le long d'un capuchon terminal pour former un scellement.

7. Pile électrolytique selon les revendications 2, 3 et 5, dans laquelle les plaques électrolytiques sont emmanchées par friction de manière coulissante à l'intérieur des rainures pour le retrait du boîtier.

8. Pile électrolytique des revendications 1 à 3, dans laquelle l'anode comprend une patte de connexion de l'anode et la cathode comprend une patte de connexion de la cathode pour la fixation à la source d'énergie, les pattes de connexion s'étendant vers l'extérieur du boîtier, le premier capuchon terminal comprenant au moins deux fentes pour recevoir la patte de connexion de l'anode et la patte de connexion de la cathode, les pattes de connexion s'étendant à l'extérieur du boîtier à travers les fentes.

9. Pile électrolytique selon la revendication 8, dans laquelle la taille de la patte de connexion de l'anode est différente de la taille de la patte de connexion de la cathode et les fentes sont dimensionnées pour correspondre à la taille de la patte respective.

10. Pile électrolytique selon la revendication 8, comprenant en outre des fils positifs et négatifs entre la source d'énergie et l'anode et la cathode, les fils étant en contact direct avec la patte de l'anode et la patte de la cathode correspondante, sans addition de connexions intermédiaires.

11. Pile électrolytique selon les revendications 1 à 3, dans laquelle chaque plaque électrolytique comprend une face avant et une face arrière de sorte que la voie de fluide comprenne le flux de fluide sur chaque face de la plaque électrolytique.

12. Pile électrolytique selon les revendications 1 à 3, dans laquelle au moins 95 % de l'aire de surface de chaque plaque électrolytique est en contact avec le fluide.

13. Pile électrolytique selon les revendications 1 à 3, dans laquelle la hauteur est dans une plage de 10,2 cm (4 pouces) à 38,1 cm (15 pouces), la largeur est dans une plage de 10,2 cm (4 pouces) à 38,1 cm (15 pouces) et la longueur est dans une plage de 25,4 cm (10 pouces) à 63,5 cm (25 pouces).

14. Pile électrolytique selon la revendication 13, dans laquelle la hauteur est dans une plage de 15,2 cm (6 pouces) à 20,3 cm (8 pouces), la largeur est dans une plage de 15,2 cm (6 pouces) à 20,3 cm (8 pouces) et la longueur est dans une plage de 25,4 cm (10 pouces) à 35,6 cm (14 pouces).

15. Pile électrolytique selon la revendication 11, dans laquelle chaque plaque latérale définit deux ou plusieurs orifices dans le boîtier, les orifices étant adaptés à recevoir des instruments d'essai et des connecteurs de câbles.
